# EUROPEAN PATENT APPLICATION

(11) **EP 4 847 185 A1**
(43) Date of publication of application: **02.12.2026**
(21) Application number: 26181698.7
(22) Date of filing: 28.05.2026
(51) Int. Cl.: B23K 26/22, E05B 9/00, E05B 17/00

(54) **METHOD FOR MANUFACTURING BOX BODIES FOR LOCKS**

(30) Priority: 29.05.2025 IT 202500012520
(71) Applicant: STV Serrature S.r.l., 36078 Valdagno (VI) (IT)
(72) Inventor: TAGLIAPIETRA, Alberto, 36078 VALDAGNO (Vicenza) (IT)
(74) Representative: Anselmi, Davide

(57) **Abstract**

Method for manufacturing box bodies (10) for locks, comprising the following operating steps: preparing a case (20); preparing a front plate (30) having a first surface (31a); and a second surface (31b) couplable to a lateral portion of said case (20); abutting said second surface (31b) of the front plate (30) against said lateral portion of said case (20); welding said second surface (31b) of the front plate (30) to said lateral portion of said case (20) by laser. Wherein said laser is selectively activated to generate a beam that passes through a portion of the case (20) until penetrating, at least partially, into a portion of said face plate (30), so that a locally melted portion of the case (20) penetrates into a corresponding melted portion of the face plate (30). Wherein the melted material of said case (20) solidifies within a first thickness (T1) of said front plate (30) so that the materials of said front plate (30) and said case (20) are interpenetrated into each other forming a single body.

## Description

### TECHNICAL FIELD

The present invention relates to a method for manufacturing box bodies for locks.

More in detail, the method according to the invention fits in the field of production and marketing of locking systems, and more specifically of locks intended to be housed in a cavity obtained in a door or window or fixture, such as for example doors and/or windows.

### PRIOR ART

It is known, in the technical field of reference, the use of locking systems, in particular locks intended to be installed on doors and/or windows.

Traditionally, such systems comprise multiple parts and/or components, which are produced separately and subsequently assembled together to obtain the finished product.

In more detail, an essential step for producing a lock involves coupling together an elongated and plate-like element with a box element, respectively referred to as "front plate" and "case" in the technical jargon of the sector (as mentioned above).

Specifically, the front plate represents that part of the lock that will be visible once the lock itself is installed on the fixture for which it was designed (i.e. door or window). The case, on the other hand, is that part of the lock that contains the internal mechanisms of the lock itself. Once coupled, the two components take the name of box body.

To date, a known method for coupling the aforesaid parts, provides for welding, by means of a welding of the wire type (in particular continuous wire) along at least one edge defined by at least one contact surface of the parts to be joined.

Operationally, the front plate and the case are pressed against each other, exerting sufficient pressure to ensure contact between at least one surface of the parts to be welded, and a subsequent welding section is deposited along an edge defined by the aforesaid contact surface, thus creating a permanent connection between them.

Usually, a plurality of welding sections are produced, in particular along a longitudinal direction and a transverse direction along which the front plate extends.

The method for manufacturing box bodies for locks of the type known so far briefly described has proved to be not without drawbacks in practice.

In particular, the main drawback lies in the fact that the method of the known type is complex and requires long production times. In fact, this known method requires long and laborious study and design of the overall dimensions as well as the orientation of the welding head with respect to the zones in which to carry out the welding sections themselves. In particular, these difficulties are proportional to the geometric complexity and overall dimensions defined by the coupling between the front plate and the case.

It follows that this known method needs to define prior to the welding operation, in particular on each case, the zone(s) where to make the weld beads. Such preliminary study and design greatly complicate the welding operation and make this method complex and laborious.

Specifically, a particularly critical aspect of the known method is the identification of a correct positioning of the welding head with respect to the case and the front plate to be welded together.

A further drawback lies in the fact that the method of the known type is slow, i.e. it requires a time interval to perform the welding to connect the front plate to the case that is typically comprised between 12 and 15 seconds. This time interval is high, or at least not satisfactory, for an industrial production of large volumes of box bodies.

A further drawback lies in the fact that the method of the known type has a poor or at least unsatisfactory weld seal. In other words, this method requires a plurality of weld beads produced on edges of the surfaces in contact between the case and the front plate, in particular produced longitudinally and transversely to the aforesaid surfaces, in order to guarantee a seal of the weld itself.

A further drawback lies in the fact that the method of the known type does not allow to obtain box bodies having a pleasant aesthetic appearance. In fact, in addition to not guaranteeing a satisfactory seal, the weld beads can be aesthetically unpleasant for an operator to see (for example during operation of assembly or maintenance of the lock), resulting in a feeling of poor strength and reliability of the finished box body.

### OBJECTS OF THE INVENTION

The object of the present invention is to provide a method for manufacturing box bodies for locks that allows to overcome the drawbacks of the aforesaid prior art.

A further object of the present invention is to provide a manufacturing method that is rapid, that is, that allows to minimize, or even eliminate, preliminary operations of study and design of the relative positioning between the welding head and zones in which to carry out the welding itself. Consequently, the object of the invention is to provide a method that therefore allows to minimize a time interval necessary to produce a finished box body (with a consequent increase in the overall efficiency of an apparatus for producing box bodies that implements this method).

A further object of the present invention is to provide a manufacturing method that is simple, in particular that can be performed regardless of the type of a surface finish of the case and/or of the front plate.

A further object of the present invention is to provide a manufacturing method that is completely safe, reliable and has repeatable results over time, i.e. for a high number of cycles.

A further object of the present invention is to provide a manufacturing method that allows to obtain a welded joint between the case and the mechanically resistant front plate.

A further object of the present invention is to provide a manufacturing method that is simple to implement and that allows to reduce the costs for producing box bodies.

A further object of the present invention is to provide a manufacturing method that presents a simple and easy positioning of a welding head, with respect to the surfaces to be welded.

A further object of the present invention is to provide a manufacturing method that allows to obtain an aesthetically pleasant final box body, or at least having a more pleasant visual appearance, compared to the prior art. A further object of the present invention is to provide a manufacturing method that allows welding operations (on case and front plate) to be carried out in zones not visible to the end user, once the aforesaid components have been assembled.

### SUMMARY

All the objects, either individually or in any combination thereof, and others that will emerge from the detailed description that follows are achieved, according to the invention, with a method for manufacturing box bodies for locks having the features disclosed in the independent claim 1.

The dependent claims outline particularly advantageous embodiments of the invention.

### BRIEF DESCRIPTION OF THE DRAWINGS

Further features and advantages of the present invention will become more apparent from the indicative and thus non-limiting description of a preferred but non-exclusive embodiment of a method for manufacturing box bodies of locks as illustrated in the appended drawings, in which:

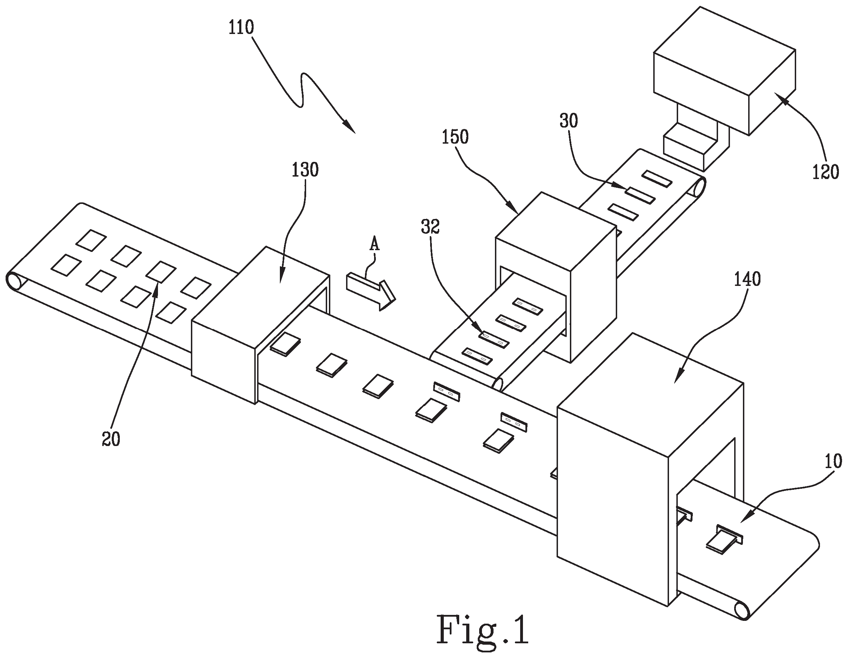

- figure 1 shows, according to a schematic perspective view, a production apparatus configured to implement the method illustrated in figure 1;
- figure 2 shows, according to a schematic perspective view, a front plate and a case of a lock suitable for the method illustrated in figure 1;
- figure 3 shows, according to an enlarged partial sectional view, a connecting portion for said case and said front plate illustrated in figure 2.

With reference to the drawings, they serve solely to illustrate embodiments of the invention with the aim of better clarifying, in combination with the description, the inventive principles at the basis of the invention.

### DETAILED DESCRIPTION OF THE INVENTION

With reference to the attached figures, an apparatus for producing box bodies for locks (or parts thereof), according to the present invention has been indicated overall with the number 100.

The apparatus 100 is configured to carry out the method of the present invention, and has an advancement direction "A" defined by one or more conveyors, for example conveyor belts or other equivalent movement means.

In accordance with the embodiment illustrated in the attached figures, a method for manufacturing box bodies 10 for locks, comprising the operating step of preparing a case 20, and preparing a front plate 30.

More specifically, the front plate 30 has a first surface 31a intended, during use, to be exposed to view (for example of a user), and a second surface 31b couplable to a lateral portion of the case 20, and opposite the first surface 31a.

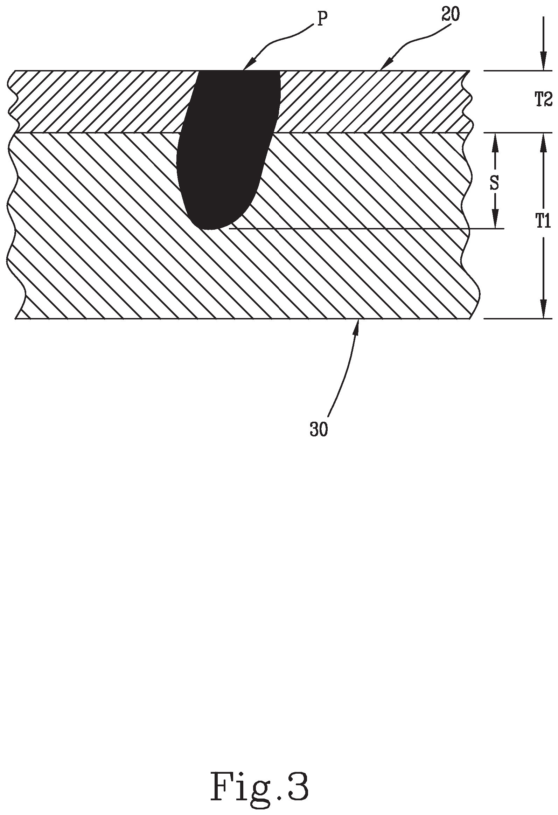

As illustrated in detail in figure 3, the front plate 30 has an elongated and plate-like shape, having a first predefined and substantially constant thickness T1 along the extension of the front plate 30 itself. In other words, the first and second surfaces 31a, 31b are planar.

The case 20 has a substantially box shape, and has a substantially constant second thickness T2.

Preferably, the first thickness T1 of the front plate 30 is different from the second thickness T2 of the case 20. In particular, the second thickness T2 is preferably less than the first thickness T1 (see figure 3).

Similarly to what has already been described for the front plate 30, the lateral portion of the case 20 has a substantially planar shape, suitable to be rested in contact with a corresponding portion of the second surface 31b of the front plate.

According to one aspect of the invention the case 20 and the front plate 30 are respectively produced from a metal material selectable from: steel, stainless steel, aluminium.

According to one aspect of the invention, the case 20 is preferably produced from steel, for example DC01, DX51, and the like, while the front plate 30 is preferably produced from a different steel than that used to produce the case 20, such as for example C490, AISI 304, and the like.

According to one aspect of the invention, the case and the front plate can also be produced from aluminium, in particular an aluminium alloy, such as for example an alloy belonging to the 1000, 3000, 4000 or 6000 family.

In accordance with a preferred embodiment of the invention, the case 20 is preferably produced from DC01 steel, while the front plate 30 is preferably produced from C490 steel.

The method further comprises the step of abutting the second surface 31b of the front plate 30 against the lateral portion of the case 20, so as to define a substantially planar surface contact (as mentioned above).

In particular, this step of abutting against is carried out by means of an abutting device of the magnetic and/or mechanical type.

The method further comprises a step of welding the second surface 31b of the front plate 30 to the lateral portion of the case 20 by laser. In particular, said laser has an absorption of a power necessary to power it of less than 2000 Watts, preferably equal to about 1500 Watts.

Advantageously, the method according to the invention is economically advantageous as it requires lower power values than those of the prior art, resulting in energy savings and therefore economic.

In accordance with one embodiment of the invention, the laser is selectively activated to generate a beam that passes through a portion of the case 20 until penetrating, at least partially, into a portion of the front plate 30, so that a locally melted portion of the case 20 penetrates into a corresponding melted portion of the front plate 30.

More specifically, the locally melted portion of the case 20 defines, once solidification has occurred, an irreversible connection of the embedded pin type P, between the case 20 and the front plate 30.

In other words, the laser beam pierces the second thickness T2 of the lateral portion of the case 20 melting it, and subsequently, such melted material penetrates (at least partially) into the first thickness T1 of the front plate 30. When the melted material of the case 20 solidifies within the first thickness T1 of the front plate 30, a single body is created, as the materials of the front plate 30 and the case 20 are interpenetrated into each other, resulting in the creation of an irreversible welded mechanical joint.

In other words, the aforesaid interpenetration between the materials of the case 20 and the front plate 30 is such as to achieve a metallurgical continuity between the case 20 and the front plate 30 themselves, and therefore define a metallurgically unique body.

In other words, the materials of the case 20 and the front plate 30 are metallurgically interpenetrated with each other, or mutually interpenetrated. Operationally, the laser beam applied to the case 20, in particular from the inside, pierces (i.e. breaks through) the wall and brings localized portions of material of the case 20 into the melted state. The melted material penetrates by thermal effect into the corresponding portions of the adjacent front plate 30, forming upon complete solidification a metallurgical interpenetration zone common to the two components (case 20 and front plate 30). This melting zone is geometrically confined to the internal interface between case 20 and front plate 30, without the thermal front reaching the external surface of front plate 30 (i.e. the face exposed, during use, to the view of a user).

Advantageously, this mechanical coupling between the case 20 and the front plate 30 is robust and strong, i.e. it has superior mechanical resistance characteristics compared to the prior art, making the final box body completely safe and reliable.

In fact, with a single weld spot (as described in more detail below), mechanical strength characteristics of the final box body are obtained that are superior to those of the prior art.

Advantageously, the method according to the invention is flexible and versatile, in that the welding step just described can be carried out completely independently of a surface finish of the case 20 and the front plate 30. In particular, this welding step can be carried out regardless of whether the surfaces of the case 20 and the front plate 30 have a surface coating treatment (such as, for example, one of those described below).

In other words, this method is applicable for any condition and/or surface state of the case 20 and the front plate 30, without requiring any modification and/or adaptation of welding parameters depending on this specific surface state (e.g. rough, painted, galvanized surface, etc.)

According to one aspect of the invention, during the welding step, described above, it is necessary to use an inert gas, preferably argon, for the removal of welding oxides.

In accordance with an embodiment of the invention, the welding step comprises producing a plurality of laser weld spots distributed along the second surface 30b, and therefore along the lateral portion of the case 20. According to one aspect of the invention, the welding step comprises producing two weld spots, preferably three weld spots.

As mentioned above, a single weld spot would also be sufficient; however, two weld spots, and preferably three weld spots, are preferably produced in order to obtain an optimal final result.

According to one aspect of the invention, the weld spots are preferably disposed not aligned with each other, i.e. not disposed along a line.

Otherwise, such weld spots may preferably be disposed in alignment with each other.

At the end of producing the aforesaid two, preferably three weld spots, they are not visible, to the view of an operator, on the first surface 31a (i.e. the surface of the exposed front plate 30).

Advantageously, the method according to the invention is able to produce box bodies aesthetically pleasant for an operator to see, as there are no visible welding traces on the first surface 31a of the front plate. In other words, the weld spots do not minimally affect the surface in view of the front plate 30.

According to one aspect of the invention, the plurality of laser weld spots is produced in a time interval of less than 10 seconds, preferably less than 6 seconds, even more preferably less than or equal to 4 seconds.

Advantageously, the method according to the invention allows to obtain a finished box body in a reduced time interval with respect to the prior art, in particular this time interval is substantially halved.

According to one aspect of the invention, the aforesaid welding step produces a penetration S for a depth equal to or less than 50% of a thickness value of the front plate 30.

In other words, the melted portion of material of the second thickness T2 of the lateral portion of the case 20 penetrates into the first thickness T1 of the front plate 30 for a value equal to about 50% (i.e. half) of the first thickness T1 itself.

According to a preferred aspect of the invention, the depth of penetration S is substantially equal to one third of the value of the first thickness T1 of the front plate 30 (i.e. about 33%).

According to a preferable aspect of the invention, the front plate 30 has a surface finish of the first and second surfaces 31a, 31b produced by means of at least one of galvanic treatment, painting, mechanical finishing, satin finishing, galvanizing, electro-galvanizing.

According to one aspect of the invention, the method may comprise a further step of removing at least a portion 32 of the aforesaid treatment from the second surface 31b, in particular before carrying out the welding step.

In other words, the method according to the invention comprises an optional step of removing (i.e. cleaning) at least a portion 32 of the second surface 31b of the front plate on which a surface treatment has been applied, such as for example a galvanizing, or a coating, such as for example a painting, and on which a weld spot will be produced.

In addition, in the event that this method provides for the step of removing, it is carried out before the step of abutting against, and the lateral portion is positioned in a zone in which the laser welding of the case 20 is intended to take place.

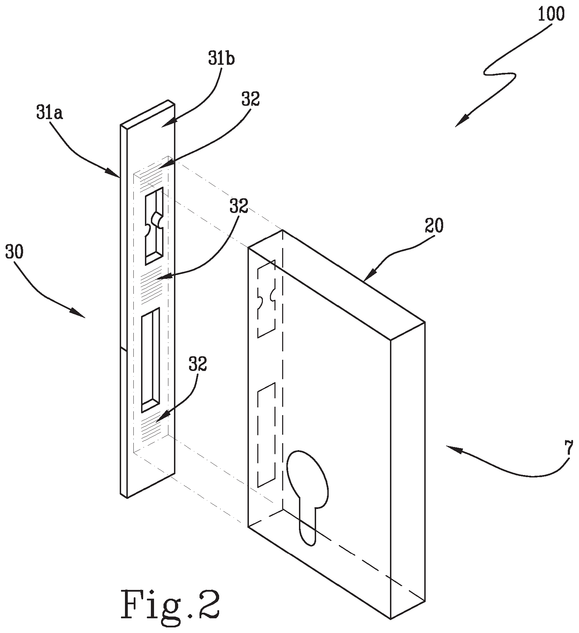

In fact, as illustrated in greater detail in figure 2, the step of removing provides for a removal of a plurality of portions 32, preferably four portions 32 corresponding to a relative weld spot.

In the event that the method provides for this step of removing (i.e. cleaning), it is necessary to use an air blow for the removal of welding oxides at the end of the welding step.

A box body 100 is also an object of the present invention, of which the same numerical references will be maintained for simplicity of exposure.

The box body 100 comprises a case 20 and a front plate 30, as introduced and described above, having a different surface finish from each other.

Preferably, the case 20 and the front plate 30 are free of any surface treatment, such as those mentioned above.

An apparatus 110 for producing box bodies for locks is also an object of the present invention, of which the same numerical references will be maintained for simplicity of exposure.

More in detail, the apparatus 110 is configured as a production line, and extends mainly along an advancement direction A, for example defined by one or more conveyors, in particular conveyor belts or other equivalent movement means.

According to one aspect of the invention, the apparatus 110 comprises a first station 120 for preparing a plurality of front plates 30, and a second station 130 for preparing a plurality of boxes 20.

The apparatus 110 further comprises a welding station 140 for welding each front plate 30 with a respective case 20.

More in detail, the welding station 140 is disposed downstream of the first and second preparation stations 120, 130, and comprises a spot laser for generating a beam that passes through a portion of the case 20 until penetrating, at least partially, into a portion of the front plate 30, and wherein the laser beam is oriented at an angle comprised between 5 and 15 degrees, preferably comprised between 8 and 12 degrees, relative to a vertical direction orthogonal to a plane in which the face plate 30 lies.

According to one aspect of the invention, the apparatus 110 comprises a station 150 for preparing each front plate 30, disposed upstream of the welding station 140 and configured to remove, by means of a laser treatment, at least a portion of a surface finish of the front plates 30.

## Claims

1. A method for manufacturing box bodies (10) for locks, comprising the following operating steps:
- preparing a case (20);
- preparing a face plate (30) having a first surface (31a) intended, during use, to be exposed to view; and a second surface (31b) couplable to a lateral portion of said case (20);
- abutting said second surface (31b) of the face plate (30) against said lateral portion of said case (20);
- welding said second surface (31b) of the face plate (30) to said lateral portion of said case (20) by laser;
**characterised in that** said laser is selectively activated to generate a beam that passes through a portion of the case (20) until penetrating, at least partially, into a portion of said face plate (30), so that a locally melted portion of the case (20) penetrates into a corresponding melted portion of the face plate (30), wherein the melted material of said case (20) solidifies within a first thickness (T1) of said front plate (30) so that the materials of said front plate (30) and said case (20) interpenetrate with each other, producing a single body.

2. The method according to claim 1, wherein said welding step comprises producing a plurality of laser weld spots distributed along said second surface (30b), preferably two weld spots, even more preferably three weld spots.

3. The method according to claim 1 or 2, wherein said plurality of laser weld spots is produced in a time interval of less than 10 seconds, preferably less than 6 seconds, even more preferably less than or equal to 4 seconds.

4. The method according to any one of the preceding claims, wherein said locally melted portion of said case (20) defines, once solidification has occurred, an irreversible coupling of the embedded pin (P) type, between said case (20) and said face plate (30).

5. The method according to any one of the preceding claims, wherein said welding step produces a penetration (S) for a depth equal to or less than 50% of a value of said first thickness (T1) of the face plate (30).

6. The method according to claim 5, wherein said depth is substantially equal to a third of said value of the first thickness (T1).

7. The method according to any one of the preceding claims, wherein said case (20) and said face plate (30) are respectively produced from a metal material selectable from: steel, stainless steel, and aluminium alloy.

8. The method according to any one of the preceding claims, wherein said face plate (30) has a surface finish of said first and second surfaces (31a, 31b) produced by means of at least one of galvanic treatment, painting, mechanical finishing, satin finishing, and electro-galvanisation.

9. The method according to claim 8, comprising the further step of removing at least a portion (32) of the surface finish from said second surface (31b); wherein said removing step takes place before the step of abutting against, and wherein said at least one portion (32) is positioned in a zone in which the laser welding to said case (20) is intended to take place.

10. A box body (100) for locks obtained by means of a method in accordance with any one of the preceding claims 1 to 9, wherein said box body (100) comprises a case (20) and a face plate (30) having a different surface finish from each other.

11. An apparatus (110) for producing box bodies for locks, configured as a production line, comprising:
- a first station (120) for preparing a plurality of face plates (30);
- a second station (130) for preparing a plurality of cases (20);
- a welding station (140) for welding each face plate (30) with a respective case (20);
wherein said welding station (140) is disposed downstream of said first and second preparing stations (120, 130);
and wherein said welding station (140) comprises a spot laser for generating a beam that passes through a portion of the case (20) until penetrating, at least partially, into a portion of said face plate (30), wherein the melted material of said case (20) solidifies within a first thickness (T1) of said front plate (30) so that the materials of said front plate (30) and said case (20) interpenetrate with each other, producing a single body, and wherein said laser beam is oriented according to an angle of between 5 and 15 degrees relative to a vertical direction orthogonal to a plane in which the face plate (30) lies.

12. The apparatus (110) according to claim 11, comprising a station (150) for preparing each face plate (30), disposed upstream of said welding station (140) and configured to remove by means of a laser treatment, at least a portion (32) of a surface finish of said face plates (30).
